# EUROPEAN PATENT SPECIFICATION

(11) **EP 2 046 130 B1**
(45) Date of publication and mention of the grant of the patent: **11.08.2010**
(21) Application number: 07730214.9
(22) Date of filing: 18.06.2007
(51) Int. Cl.: A21D 2/16, A21D 2/24, A21D 8/04

(54) **IMPROVED BAKERY PRODUCTS, PROCESSES FOR IMPROVING BAKERY PRODUCTS AND BAKING INGREDIENT, AND METHOD OF USING BETAINE IN BAKING**
VERBESSERTE BACKWAREN, VERFAHREN FÜR DIE VERBESSERUNG VON BACKWAREN UND BACKZUTAT SOWIE VERFAHREN ZUR VERWENDUNG VON BETAIN BEIM BACKEN
PRODUITS DE BOULANGERIE AMÉLIORÉS, PROCÉDÉS SERVANT À AMÉLIORER DES PRODUITS DE BOULANGERIE ET INGRÉDIENT DE CUISSON ET PROCÉDÉ D'UTILISATION DE BÉTAÏNE LORS DE LA CUISSON

(30) Priority: 16.06.2006 US 455077
(43) Date of publication of application: 15.04.2009
(73) Proprietor: Danisco A/S, 1001 Copenhagen K (DK)
(72) Inventor: KAPPELMAN, David, Olathe, Kansas 66062 (US); GASTEL, Ariella, Hastlings-on-hudson, New York (US); CRAIG, Stuart, Somers, New York 10589 (US); KAY, Susan, Lawrence, Kansas 66049 (US)
(74) Representative: Hjelt, Pia Dorrit Helene
(86) International application number: PCT/EP2007/055998
(87) International publication number: WO 2007/144433

(56) References cited:
- EP-A1- 0 412 607
- WO-A-01/41795
- JP-A- 1 132 533
- KR-A- 20030 025 587
- US-B1- 6 217 930
- DE ZWART, F.J.; SLOW, S. ET AL.: "Glycine betaine and glycine betaine analogues in common foods" FOOD CHEMISTRY, vol. 83, no. 2, 2003, pages 197-204, XP002452496
- DATABASE WPI Week 198309 Derwent Publications Ltd., London, GB; AN 1983-20736K XP002452481 -& JP 58 009642 A (NIPPON TENSAI SEITO KK) 20 January 1983 (1983-01-20)
- PYLER, E.J.: "Baking science and technology" 1988, SOSLAND PUBLISHING , KANSAS CITY (USA) , XP002452524 page 334 - page 335 page 348 - page 350

## Description

### FIELD OF THE INVENTION

The present invention relates to improved bakery products containing betaine and enzyme. The present invention also relates to processes for improving the textural properties of bakery products, as well as the freshness of said bakery product. In a preferred embodiment of the present invention an emulsifier is used for giving a further improving effect to the enzyme/betaine combination. The invention also relates to an improved baking ingredient based on enzyme and betaine and to a method of using betaine and enzyme in baking.

### BACKGROUND OF THE INVENTION

Enzymes are commonly used in their purified form, often together with emulsifiers, in food preparations to improve the softness of bakery products, to retard moisture migration from the bakery product, to retard staling of the bakery product and to impart a smoother and softer texture to the product. In food production it is essential to find an alternative to the traditional chemical-based technologies and to replace synthetic chemicals in many processes.

There is a continuous need in the field of baked products to find a solution to increase softness of the baked product, reduce moisture migration, extend shelf-life, and improve freshness and to produce a desirable appearance, taste and texture. It is known that the quality of a bakery product gradually deteriorates during storage. The crumb loses softness and elasticity and becomes firm and crumbly. This staling is mostly due to the retro gradation of starch, which is a transition of the starch gelatinized during baking from an amorphous state to a crystalline state. The term staling means those undesirable changes in the properties of a baked product, which occur after leaving the oven. Staling is a problem which becomes more serious as more time lies between preparation and time of consumption. The problems mentioned include increase in the firmness of the crumb, evaporation of the moisture from the crumb, loss of flavor and changes in flavor, as well as microbial deterioration. In the food industry there is a continuous effort to make products, which are pleasing to both eyes and to the palate. Baked products' organoleptic properties, such as appearance, flavor and texture, should deteriorate as little as possible. As a result of staling, generally, the appearance, taste and texture become unpleasing to the consumer and this, in turn, results in a shorter shelf-life of the baked product.

No satisfactory solution to this well known problem has been found so far. For example there has been an attempt to solve this problem by coating baked products with a sealant to increase the water retention thereof. Addition of fats, waxes and simple syrups have also been attempted. Although fats and waxes worked well as sealants, an undesirable mouth feel and appearance was developed in the product. Also waxes and fats were not suitable for icing and glazing, due to the fact that they did not readily adhere to the slick surface. Syrups did not solve the problem either as sealants. They did not prevent moisture migration over prolonged shelf-life nor did they sufficiently prevent moisture migration from products with high water activity.

In the prior art there are suggestions of ways to diminish the negative aspects of staling of bakery products. The changes in bread start immediately after leaving the oven as a result of a recrystallization process of starch which has been gelatinized during baking. In EP application No. 0412607 it is disclosed that α-amylases or emulsifiers can influence the initial firmness reduction of the crumb.

It is well known in baking practice, that if an enzyme is added to the dough used for producing baked products, an anti-staling effect is obtained. In addition one or more emulsifiers may be added to the flour or the dough according to US Patent No. 6,197,352. Emulsifiers improve dough flexibility and may influence the consistency of the resulting bread and its storage stability. The emulsifier has the effect of reducing the surface tension between oil/water/air interfaces to increase the emulsion stability.

Betaine has been added to baked goods to provide a product which retards the moisture migration and improves the organoleptic properties as an alternative to the combinations of earlier used ingredients. Betaine (also known as trimethylglysine, TMG, glycine betaine, oxyneurine or 1-carboxy-N,N,N-trimethylmethanaminium hydroxide (chemical formula C₅H₁₁NO₂) is a natural product found in plants, like sugar beets, spinach and broccoli. Betaine is an organic osmoprotectant, which is highly hygroscopic. It also acts as a humectant in foods since it reduces water activity thereby extending shelf-life, it adds nutritional benefits and improves flavors. It may be available as anhydrous betaine (no water of crystallization) or betaine monohydrate. Betaine also forms an inner salt between its positively charged nitrogen atom and a negatively charged oxygen atom. Betaine supplements are manufactured as byproducts of sugar beet processing. They are available in powder, tablet, and capsule forms.

Until 1960, betaine was used mainly in pharmaceutical preparations for increasing the concentration of acids in the stomach. Nowadays it has been used in animal feeds to stimulate weight increase. Betaine is used also in cosmetics because it is non-irritating and it has moisturizing properties. In food industry the areas of use are food preservatives, dietary supplements and rehydration drinks.

Betaine is a nutrient that plays an important role in the health of the cardiovascular system. Studies have suggested that betaine, along with other nutrients, helps to reduce potentially toxic levels of homocysteine, a naturally occurring amino acid that can be harmful to blood vessels thereby contributing to the development of heart disease, stroke, and peripheral vascular disease (reduced blood flow to the legs and feet). In the mammalian body, betaine has a vitamin resembling function. The action mechanism is closely related to the mechanism of folic acid and vitamin B₁₂, homocysteine is broken down and toxic levels of this substance are reduced in the bloodstream. Betaine is present in liver, kidney, testes, spleen, pancreas and heart, reducing the risk for serious conditions, such as heart strokes and fatty deposits in the liver. Dimethyl glycine, a derivative of betaine, enhances the immune response. Betaine also plays a major role in protecting kidney cells against highly osmotic urine.

Betaine is a natural product and hence its use in the food industry is of great interest. The inventors of US patent No. 6,217,930 have found that betaine alone accomplishes objectives served by the combination of other components normally added to foods, namely emulsifiers, gums, enzymes, fibers and fruit. The advantages gained included the ability to retard moisture migration from the baked goods, the ability to retard staling of the baked goods and impart a smoother and softer texture to the baked goods. In addition, betaine also eased the preparation of the baked goods by decreasing the viscosity, thereby facilitating the mixing and the processing in preparing the baked product.

Despite the advantages gained in bakery by the use of betaine as a replacement for emulsifiers and enzymes, there still exists a need for improving the texture such as the softness and the shelf-life of baked products. Now the present inventors have found that combining betaine with an enzyme will surprisingly provide a significant improvement in the properties of baked products.

### SUMMARY OF THE INVENTION

The present invention relates to an improved bakery product containing a combination of betaine and enzyme in an effective amount to improve the textural properties of a bakery product when baked. The improved properties are selected among increased softness, reduced staling, increased shelf-life, and combination thereof. In addition the inventive combination improves the sensory properties, such as the freshness of a baked product. The added betaine and enzyme preferably provide a synergistic effect for improving at least one of said properties of the bakery product. The bakery products of the present invention comprise also water and flour. Typically a number of other common baking ingredients may be included also.

The present invention is defined by what is disclosed in the independent claims. The dependent claims define embodiments of the invention.

The amount of betaine ranges from 0.1 to 5.0 wt % calculated on the weight of the flour and the amount of enzyme ranges from 0.01 to 20 mg enzyme protein per kg of flour. The improved bakery product is preferably a soft bakery product. Typically the water activity (A_{w}) of the bakery product will be 0.85 or more. The bakery product of the present invention may be a baked, semi-baked or unbaked product.

An embodiment of the present invention is directed to baked goods further containing emulsifier in an effective amount, which preferably has a synergistic effect on the betaine / emulsifier combination. The emulsifier in combination with the betaine and the enzyme preferably prove at least one of the textural properties of the baked product.

In addition, the present invention relates to a process for improving the properties of a bakery product, which process comprises combining flour, water, enzyme and betaine, and optional further ingredients and processing the resulting mixture to provide a bakery product, said betaine and enzyme being provided in an effective amount to improve the properties of said bakery product when baked, said improved properties being selected from the group consisting of increased softness, reduced staling, increased shelf-life and combinations thereof. In a preferred embodiment of the invention betaine and enzyme operate together in a synergistic manner to enhance the improving effect on the bakery product.

In a preferred embodiment said process further comprises including an emulsifier in said mixture before baking in an amount sufficient for causing the combination of betaine, enzyme and emulsifier to synergistically improve at least one of said properties of said bakery product when baked.

Moreover, the present invention relates to a baking ingredients either consisting essentially of a combination of enzyme and betaine or consisting essentially of enzyme, betaine and emulsifier. The ingredient may optionally include a carrier. The ingredient includes the components of the combination in effective amounts capable of improving the textural properties of the bakery product when baked.

### DETAILED DESCRIPTION OF THE INVENTION

The present invention relates to improved bakery products wherein a combination of enzyme and betaine provide benefits in excess of those obtainable with the use of an enzyme alone or betaine alone. In the tests of the present invention it has been found that betaine in combination with an enzyme has a greater impact on improving the anti-staling properties than the sum of their separate impacts. This synergistic effect has been surprising. The combination according to the invention is better in enhancing the softness of bread and in reducing staling than the single components of the combination. It was prior known that betaine can replace enzyme and emulsifier in baked products. However a surprising result of the present invention is that betaine has shown even greater positive effects to the freshness and the softness of baked products when it is combined with an enzyme in a bakery product. An embodiment of the present invention is directed to above-mentioned baked goods further containing emulsifier in a synergistically effective amount. This combination has shown great improvement in softness and shelf-life compared to similar bakery products with only enzyme and emulsifier.

An embodiment of the present invention is directed to a bakery product containing flour and water as well as enzyme and betaine, which enzyme and betaine have a synergistic effect and are capable of increasing softness of the bakery product, improving the shelf-life significantly, retarding staling and preserving the freshness of said bakery product compared to a conventional bakery product with only enzyme and emulsifier used when baked.

A preferred embodiment of the invention is directed to a combination of betaine, enzyme and emulsifier, in which combination the respective components are present in synergistically effective amounts to further increase the softness of the bakery product, to improve the shelf-life and retard staling significantly and to preserve the freshness of said bakery product compared to a conventional bakery product with only enzyme and emulsifier used when baked. In accordance with the present invention the softness of a baked bakery product can increase as much as 5 to 50 % compared to similar bakery product with only enzyme and emulsifier.
Without being bound to any theory, it is believed that the betaine and enzyme provide a retarded rate of crumb firming during storage of the bakery product. It is also believed that they modify selectively the crystallization process during and after baking.

In preferred embodiments, the betaine is present in the baked products in amounts 0.1-5.0 wt% calculated on the weight of the flour. More preferably the betaine is present in amounts ranging from about 0.1 wt% to 0.5 wt%, most preferably from about 0.1 wt% to 0.2 wt%.

In preferred embodiments, the enzyme is present in the baked products in amounts 0.01 to 20 mg enzyme protein per kg of flour.

In preferred embodiments, the emulsifier is present in the baked products in amounts 0.01 to 2.0 wt% calculated on the weight of the flour.

The betaine and enzyme and optionally the emulsifier is preferably provided as a baking ingredient to just be added at baking. In such baking ingredient the amount of betaine per 1 kg of flour is 0.1 to 50 g and the amount of enzyme protein per 1 kg of flour to be used in baking is 0.01 to 20 mg. When an emulsifier is included, the amount per 1 kg of flour is 0.1 to 20 g.

As used herein the term betaine refers to the compound trimethylglycine and its salts.

As used herein the term enzyme refers to amylases which are used in flour baked bakery products. Typical enzymes useful in the present invention are amylases of bacterial, cereal or fungal origin with varying thermostability, such as endo-alpha-amylases, exo-alpha-amylases, beta-amylases, maltogenic alpha-amylases and combinations thereof.

As used herein the term emulsifier refers to emulsifiers which are used in baking. Typical emulsifiers are mono- and diglycerides of various fatty acid compositions, including glycerol monostearate, ethoxylated, succinylated, acetylated or lactylated monoglycerides, sodium stearoyl lactylate, lecithin, phospholipids, polyoxyethylene stearate, polysorbate, propylene glycol monoesters, polyglycerol esters, esters of fatty acids and esters of monoglycerides, and mixtures thereof.

The term "bakery product" refers to a number of products. As used herein, it is used as defined in U.S. Government Regulations 21 C.F.R. Sec. 170.3, i.e. for the meaning of baked goods and baking mixes, including all ready-to-eat and ready-to-bake products, flours, and mixes requiring preparation before serving. The ingredients of bakery products vary, depending on the product in question. The bakery products of the present invention comprise at least the following ingredients, namely water, flour, enzyme and betaine. The bakery product may also comprise an emulsifier. The bakery products of the present invention typically will also include sweeteners and fat and a wide variety of natural and artificial flavorings and colorants well known in the art. Other ingredients including other nutritive substances, preservatives, anti-oxidants and fillers or yeast may also be present. Bakery products can be either baked to completion or left into semi-baked state, after which a short period of extra time is needed for the final baking. Bakery products can also be left in unbaked state until further use. Freezing can be used to preserve an unbaked product.

The term "baked product" refers to products cooked by heat in an oven.

The term "textural properties" refers to physical properties of the bakery product when baked. Important textural properties discussed in relation to the invention are softness, cohesiveness and resilience. These, in addition to further staling, influence the physical characteristics of a bakery product during storage. The overall textural property is often referred to as shelf-life.

As used herein term softness refers to a bakery product not being firm against pressure.

As used herein term staling means those undesirable changes in the properties of a bakery product, which occur after leaving the oven. It is known that the quality of a bakery product gradually deteriorates during storage. The crumb loses softness and elasticity and becomes firm and crumbly.

As used herein term shelf-life refers to the length of time a bakery product will last without deteriorating.

As used herein term freshness refers to the good characteristics of a bakery product when it has not yet staled or deteriorated.

The present invention relates mainly to soft bakery products. The bakery products typically have a A_{w} of 0.85 or more. A_{w} refers to water activity, which is well known to those skilled in the art. The group of soft baked products comprises, but it is not limited to bread, cake, donut, brownie, waffle, muffin, roll, bagel, strudel, pastry, croissant, pizza, bun, pancake, cupcake, baked nutrition bar, soft cookie, cracker and the like. The preferred bakery product is a baked bread product.

As used herein the term dough refers to an unbaked mixture of flour, water and other ingredients, which mixture is a precursor to making a bakery product.

As used herein term flour refers to a powder, which may be either fine or coarse, prepared by sifting and grinding the meal of a grain, especially wheat.

The invention is further illustrated in the following examples, which are not intended to limit the scope of the present invention in any way.

### EXAMPLES

### Example 1

A baked product, containing the following ingredients, was prepared for a ranking test.

| *Ingredient* | *% weight* |
|---|---|
| *Sponge:* | |
| Medium Whole Wheat Flour | 60.0 |
| Vital Wheat Gluten | 8.0 |
| PANODAN® 205 K | 0.25 |
| Instant Yeast | 1.6 |
| Water | 50.0 |
| GRINDAMYL^{™} MAX-LIFE U1045 | 20 mg/kg |
| | |

| *Dough:* | |
|---|---|
| Medium Whole Wheat Flour | 40.0 |
| Salt | 2.2 |
| Calcium Propionate | 0.13 |
| Honey | 11.0 |
| Molasses | 3.0 |
| Instant Yeast | 0.75 |
| DIMODAN® PH 300 | 0.375 |
| High fructose corn syrup | 4.0 |
| Vegetable Oil | 2.7 |
| Azodicarbonamide | 25 ppm |
| Ascorbic Acid | 120 ppm |
| Water | 15.0 |
| Betafin BF 20 | variable amount according to Table I |

Baking was started by making the sponge. The ingredients were placed in a bowl and mixed for 1 minute on low speed, then 3 minutes on medium speed with a dough hook. The dough was fermented in a cabinet set at 30 °C for 3 hours. The additional ingredients were then added to the bowl and the dough was mixed for 1 minute on low speed and 8 minutes on medium speed. The resulting dough was let to rest for 5 minutes, then was divided into pieces and rounded. The dough was then moulded into cylinders using a bread moulder, placed in a greased pan, and allowed to raise (proof) at 40 °C, 85 % relative humidity for 60 minutes. The dough was placed in an oven and it was baked in 200 °C for 24 minutes.

PANODAN® 205K is a diacetyl tartaric acid ester of monoglyceride, which is provided by Danisco A/S. DIMODAN PH 300 is a distilled mono-glyceride produced from the esterification between a triglyceride with glycerol available from Danisco A/S. GRINDAMYL^{™} MAX-LIFE U1045 is a bakery enzyme combination available from Danisco A/S. Betafin BF 20 is a sugar beet derived betaine product available from Danisco company Finnfeeds Finland Oy.

In the test the panelists were asked to rank three samples in order of sweetness, bitterness, gumminess, freshness and overall liking. A chi square test was made to determine statistical difference of the overall ranking. For significance at the 0.05 probability level, the chi square for the test needs to exceed 5.99.

The results are shown in Table I. According to the results only the freshness question showed significance at this probability level. The overall liking test showed significance at the 0.1 % level.

The higher level of betaine (0.4 % Betafin BF 20) was shown to be statistically different and ranked higher from both the control and the lower level of betaine (0.2 %) for freshness. For overall liking the difference between the higher and the lower level of betaine (0.2 % and 0.4 %) showed a weak significance and 0.4 % betaine was ranked better in overall ranking.

### Example 2

A baked product, containing the following ingredients, was prepared:

| *Ingredient* | *% weight* |
|---|---|
| *Sponge:* | |
| White Bread Flour | 75.0 |
| Oil | 2.0 |
| DIMODAN® PH 300 | 0 or 0.5 according to Table II |
| Instant Yeast | 1.3 |
| Water | 43.0 |
| GRINDAMYL^{™} MAX-LIFE U 1045 | 0 or 20 mg/kg according to Table II |
| | |

| *Dough:* | |
|---|---|
| White Bread Flour | 25.0 |
| Salt | 2.0 |
| Calcium Propionate | 0.25 |
| Instant Yeast | 0.7 |
| High fructose corn syrup | 12.0 |
| Ascorbic Acid | 30 ppm |
| Water | 11.1 |
| Betaine | variable amount according to Table II |

Baking was started by making the sponge. The ingredients were placed in a bowl and mixed for 1 minute on low speed, then 3 minutes on medium speed with a dough hook. The dough was fermented in a cabinet set at 30 °C for 3 hours. The additional ingredients were then added to the bowl and the dough was mixed for 1 minute on low speed and 8 minutes on medium speed. The resulting dough was let to rest for 5 minutes, then was divided into pieces and rounded. The dough was then moulded into cylinders using a bread moulder, placed in a greased pan, and allowed to raise (proof) at 40 °C, 85 % relative humidity for 60 minutes. The dough was placed in an oven and it was baked in 220 °C for 22 minutes.

A combination of an enzyme (GRINDAMYL^{™} MAX-LIFE U1045), an emulsifier (DIMODAN® PH 300) and betaine (Betafin BF 20) (0.1 % and 0.2 % calculated from the weight of the flour) was tested in comparison with only betaine added -samples (0.1 - 0.5 % calculated from the weight of the flour, no added enzyme nor emulsifier) as well as control samples (no added enzyme, emulsifier nor betaine). The combination of the enzyme, the emulsifier and betaine yielded significantly softer bread (about 10 %) throughout the shelf-life study when compared to enzyme with emulsifier without betaine added or betaine added alone. The numerical values of the above-mentioned test are shown in Table II.

DIMODAN® PH 300 is a distilled monoglyseride emulsifier available from Danisco A/S. GRINDAMYL^{™} MAX-LIFE U1045 is a bakery enzyme combination available from Danisco A/S. Betafin BF 20 is a sugar beet derived betaine product available from Danisco company Finnfeeds Finland Oy.

On day 1 the combination of three components gave about 35 % better results of softness of bread compared to the control sample and enzyme plus emulsifier gave 19 % better softness of bread when compared to the control sample. Pure betaine added (0.4 %) gave 11 % better results compared to the control sample on day 1.

On day 11, the 0.1 % and 0.3 % betaine only variables were significantly firmer than the control sample, but the 0.2 %, 0.4 % and 0.5 % betaine only -samples were not significantly different from the control sample. Betaine alone at levels of 0.1 - 0.5 % does not appear to extend the shelf-life of a bread product. On day 11 the softness of the bread with the combination of betaine, enzyme and emulsifier was about 50 to 52 % better compared to the control sample. The combination of the enzyme and the emulsifier was 44 % softer than the control sample.

It is clear that a synergy exists between enzyme, emulsifier and betaine in softening the bread and also extending the shelf-life of a bread product. The test result shows about 13 % softer bread right after baking on Day 1 and about 5 % better softness on Day 11 compared to the prior art method of enzyme plus emulsifier.

### Example 3

A baked product, containing the following ingredients, was prepared:

| *Ingredient* | *% weight* |
|---|---|
| *Sponge:* | |
| White Bread Flour | 75.0 |
| Oil | 2.0 |
| DIMODAN® PH 300 | 0 or 0.5 according to Table III |
| Instant Yeast | 1.3 |
| Water | 43.0 |
| GRINDAMYL^{™} MAX-LIFE U 1045 | 0 or 20 mg/kg according to Table III |
| | |

| *Dough:* | |
|---|---|
| White Bread Flour | 25.0 |
| Salt | 2.0 |
| Calcium Propionate | 0.25 |
| Instant Yeast | 0.7 |
| High fructose corn syrup | 12.0 |
| Ascorbic Acid | 30 ppm |
| Water | 11.1 |
| Betaine | variable amount according to Table III |

A baked product was prepared similarly to Example 2 and the variable amounts of GRINDAMYL^{™} MAX-LIFE U1045, DIMODAN® PH 300 and Betafin BF 20 are shown in Table III.

DIMODAN® PH 300 is a distilled monoglyseride emulsifier available from Danisco A/S. GRINDAMYL^{™} MAX-LIFE U1045 is a bakery enzyme combination available from Danisco A/S. Betafin BF 20 is a sugar beet derived betaine product available from Danisco company Finnfeeds Finland Oy.

A combination of enzyme (GRINDAMYL^{™} MAX-LIFE U1045) and betaine (Betafin BF 20) as well as a combination of emulsifier (DIMODAN® PH 300) and betaine (Betafin BF 20) were tested in comparison with only enzyme or emulsifier control samples with no added betaine. The combination of the enzyme and betaine yielded significantly softer bread (about 5 to 25 %) throughout the shelf-life study when compared to enzyme without betaine added or emulsifier with betaine added or emulsifier only.

On day 1 the combination of enzyme and betaine (0.2 %) gave about 13 % better results of softness of bread compared to the only emulsifier added -sample and about 7 % better results of softness of bread compared to the emulsifier plus betaine added -sample and only enzyme added -sample.

On day 9, the combination of enzyme and betaine (0.2 %) gave about 24 % better results of softness of bread compared to the only emulsifier added -sample, about 19 % better results of softness of bread compared to the emulsifier plus betaine added -sample and about 13 % better results of softness of bread compared to the only enzyme added - sample. The emulsifier added to the dough with or without betaine did not show a significant effect regarding the softness of the bread.

**TABLE I**

| | | **1** | **2** | **3** | **Rank sum** | **Differences** | **Comments** |
|---|---|---|---|---|---|---|---|
| | A = Non-added betaine control sample | 9 | 5 | 6 | 37 | -1 | A=least sweet |
| **Sweetness** | B = 0.2 % Betafin BF 20 | 6 | 10 | 4 | 38 | -8 | B&C tied for medium & most sweet |
| | C = 0.4 % Betafin BF 20 | 5 | 5 | 10 | 45 | -7 | |
| | | | | | **Chi sq: 1,9** | | |
| **Bitterness** | A | 6 | 6 | 8 | 42 | -1 | A=most bitter |
| | B | 4 | 9 | 7 | 43 | 7 | B=medium bitter .. |
| | C | 10 | 5 | 5 | 35 | 8 | C=least bitter |
| | | | | | **Chi sq: 1,9** | | |
| **Gumminess** | A | 3 | 10 | 7 | 44 | 4 | A=medium gunny |
| | B | 6 | 8 | 6 | 40 | 8 | B=medium gummy |
| | C | 11 | 2 | 7 | 36 | 4 | C=least gummy |
| | | | | | **Chi sq: 1,6** | | |
| **Freshness** | A | 11 | 5 | 4 | 33 | -3 | A=least fresh |
| | B | 6 | 12 | 2 | 36 | -18 | B=medium fresh |
| | C | 3 | 3 | 14 | 51 | -15 | C=most fresh |
| | | | | | **Chi sq: 9,3** | | |
| **Overall liking (only 19 answers)** | A | 9 | 4 | 6 | 35 | 2 | A=least liked |
| | B | 7 | 10 | 2 | 33 | -11 | B=medium liked |
| | C | 3 | 5 | 11 | 46 | -13 | C=most liked |
| | | | | | **Chi sq: 5,1509** | | |

**TABLE II**

| | **Day 1** | | | | **Day 4** | | | | **Day 8** | | | | **Day 11** | | | |
|---|---|---|---|---|---|---|---|---|---|---|---|---|---|---|---|---|
| | **S** | **C** | **R** | **D** | **S** | **C** | **R** | **D** | **S** | **C** | **R** | **D** | **S** | **C** | **R** | **D** |
| 1 | 202 | 0.764 | 0.38 | -19.2 | 298 | 0.72 | 0.329 | -42.9 | 412 | 0.670 | 0.295 | -46.6 | 491 | 0.668 | 0.292 | -43.6 |
| 2 | 250 | 0.795 | 0.471 | -- | 522 | 0.698 | 0.373 | --- | 772 | 0.656 | 0.346 | --- | 870 | 0.645 | 0.336 | --- |
| 3 | 282 | 0.789 | 0.469 | 12.8 | 584 | 0.699 | 0.374 | 11.9 | 830 | 0.648 | 0.345 | 7.5 | 958 | 0.623 | 0.328 | 10.1 |
| 4 | 259 | 0.797 | 0.470 | 3.6 | 572 | 0.694 | 0.369 | 9.6 | 798 | 0.651 | 0.340 | 3.4 | 948 | 0.639 | 0.338 | 9.0 |
| 5 | 167 | 0.764 | 0.372 | -33.2 | 262 | 0.707 | 0.313 | -49.8 | 358 | 0.666 | 0.264 | -53.6 | 420 | 0.661 | 0.286 | -51.7 |
| 6 | 222 | 0.793 | 0.466 | -11.2 | 504 | 0.699 | 0.370 | -3.4 | 751 | 0.647 | 0.336 | -2.7 | 874 | 0.633 | 0.333 | 0.5 |
| 7 | 241 | 0.799 | 0.464 | -3.6 | 581 | 0.688 | 0.361 | 11.3 | 791 | 0.631 | 0.322 | 2.5 | 937 | 0.632 | 0.336 | 7.7 |
| 8 | 263 | 0.794 | 0.458 | -5.2 | 576 | 0.695 | 0.368 | 10.3 | 841 | 0.642 | 0.328 | 8.9 | 988 | 0.631 | 0.331 | 13.6 |
| 9 | 163 | 0.765 | 0.379 | -34.8 | 272 | 0.719 | 0.326 | -47.9 | 368 | 0.671 | 0.290 | -52.3 | 434 | 0.665 | 0.284 | -50.1 |

| | | | | | | | | | | | | | | | | |
|---|---|---|---|---|---|---|---|---|---|---|---|---|---|---|---|---|
| S = Softness (results in Grams of Force) C = Cohesiveness R = Resilience D = % Difference in Softness from Control 1 = 0.5 % DIMODAN® PH 300; GRINDAMYL^{™} MAX-LIFE U1045 (no betaine) 2 = No added Control (no betaine, enzyme or emulsifier) 3 = 0.1 % Betafin BF 20 (no emulsifier or enzyme) 4 = 0.2 % Betafin BF 20 (no emulsifier or enzyme) 5 = 0.5 % DIMODAN® PH 300; GRINDAMYL^{™} MAX-LIFE U1045; 0.2 % Betafin BF 20 6 = 0.4 % Betafin BF 20 (no emulsifier or enzyme) 7 = 0.5 % Betafin BF 20 (no emulsifier or enzyme) 8 = 0.3 % Betafin BF 20 (no emulsifier or enzyme) 9 = 0.5 % DIMODAN® PH 300; GRINDAMYL^{™} MAX-LIFE U1045; 0.1 % Betafin BF 20 | | | | | | | | | | | | | | | | |

**TABLE III**

| | **Day 1** | | | | **Day 3** | | | **Day 7** | | | **Day 9** | | |
|---|---|---|---|---|---|---|---|---|---|---|---|---|---|
| | | **S** | **C** | **R** | **S** | **C** | **R** | **S** | **C** | **R** | **S** | **C** | **R** |
| | 1 | 339 | 0.740 | 0.369 | 530 | 0.681 | 0.319 | 777 | 0.634 | 0.292 | 873 | 0.610 | 0.279 |
| | 2 | 316 | 0.733 | 0.352 | 528 | 0.688 | 0.327 | 818 | 0.622 | 0.291 | 826 | 0.627 | 0.290 |
| | 3 | 314 | 0.773 | 0.442 | 456 | 0.720 | 0.386 | 665 | 0.668 | 0.343 | 764 | 0.659 | 0.336 |
| | 4 | 294 | 0.785 | 0.440 | 435 | 0.721 | 0.380 | 619 | 0.672 | 0.341 | 667 | 0.661 | 0.333 |
| | 5 | 320 | 0.777 | 0.433 | 455 | 0.722 | 0.375 | 688 | 0.667 | 0.337 | 757 | 0.655 | 0.323 |
| | 6 | 293 | 0.780 | 0.445 | 443 | 0.715 | 0.375 | 685 | 0.671 | 0.341 | 752 | 0.648 | 0.321 |

| | | | | | | | | | | | | | |
|---|---|---|---|---|---|---|---|---|---|---|---|---|---|
| S = Softness (results in Grams of Force) C = Cohesiveness R = Resilience 1 = 0.5 % DIMODAN® PH 300; (no betaine or enzyme) 2 = 0.5 % DIMODAN® PH 300 + 0.2 % Betafin BF 20 (no enzyme) 3 = GRINDAMYL^{™} MAX-LIFE U1045 (no betaine or emulsifier) 4 = GRINDAMYL^{™} MAX-LIFE U 1045 + 0.2 % Betafin BF 20 (no emulsifier) 5 = GRINDAMYL^{™} MAX-LIFE U 1045 + 0.3 % Betafin BF 20 (no emulsifier) 6 = GRINDAMYL^{™} MAX-LIFE U 1045 + 0.4 % Betafin BF 20 (no emulsifier) | | | | | | | | | | | | | |

## Claims

1. A bakery product comprising flour and water, said bakery product further containing a combination of betaine and an enzyme in an effective amount to improve the textural properties of said bakery product when baked, said improved properties being selected from the group consisting of increased softness, reduced staling, increased shelf-life and combinations thereof and wherein said effective amount of betaine comprises 0.1 to 5.0 wt % calculated on the weight of the flour and said enzyme comprises an amylase in an effective amount ranging from 0.01 to 20 mg enzyme protein per kg of flour.

2. The bakery product according to claim 1, wherein the said bakery product further contains emulsifier in a synergistically effective amount to further improve at least one of said properties of said bakery product when baked.

3. The bakery product according to claim 1 or 2 , wherein the betaine is present in amounts ranging from 0.1 % to 0.5 % calculated on the weight of the flour.

4. The bakery product according to claim 3, wherein the betaine is present in amounts ranging from 0.1 % to 0.2 % calculated on the weight of the flour.

5. The bakery product according to claim 1, wherein said enzyme comprises amylase.

6. The bakery product according to claim 5, wherein the said bakery product is selected from the group consisting of bread, cake, donut, brownie, waffle, muffin, roll, bagel, strudel, pastry, croissant, pizza, bun, pancake, cupcake, baked nutrition bar, soft cookie and cracker.

7. The bakery product according to claim 6, wherein the said bakery product is a bread product.

8. The bakery product according to claim 1, wherein the said bakery product is a baked, semi-baked or unbaked bakery product.

9. The bakery product according to claim 2, wherein the emulsifier is selected from the group consisting of monoglyceride, diglyceride, glycerol monostearate, ethoxylated, succinylated, acetylated or lactylated monoglycerides, sodium stearoyl lactylate, lecithin, phospholipid, polyoxyethylene stearate, polysorbate, propylene glycol monoesters, polyglycerol esters, ester of fatty acid and ester of monoglyceride, and mixtures thereof.

10. The bakery product according to claim 2, wherein the emulsifier is present in amount ranging from 0.01 wt % to 2.0 wt % calculated on the weight of the flour.

11. A process for improving the softness, staling and/or shelf-life properties of a baked bakery product, the process comprising combining flour, water, enzyme and betaine, and optional further ingredients and processing the resulting mixture to provide a bakery product, said betaine comprising 0.1 to 5.0 wt % calculated on the weight of the flour and said enzyme comprising an amylase and being provided in an amount ranging from 0.01 to 20 mg enzyme protein per kg of flour.

12. The process according to claim 11, wherein said processing is selected from forming a dough, semi-baking and baking.

13. The process according to claim 11, wherein said process further comprises including an emulsifier in said mixture before baking in an amount sufficient for causing the combination of betaine, enzyme and emulsifier to synergistically improve at least one of said properties of said bakery product when baked.

14. The process according to claim 11, wherein the betaine is provided in amounts ranging from 0.1 wt % to 0.2 wt % calculated on the weight of the flour.

15. The process according to claim 13, wherein the emulsifier is provided in amounts ranging from 0.01 wt % to 2.0 wt % calculated on the weight of the flour.

16. The process according to claim 13, wherein said emulsifier is selected from the group consisting of monoglyceride, diglyceride, glycerol monostearate, ethoxylated, succinylated, acetylated or lactylated monoglycerides, sodium stearoyl lactylate, lecithin, phospholipid, polyoxyethylene stearate, polysorbate, propylene glycol monoesters, polyglycerol esters, ester of fatty acid and ester of monoglyceride, and mixtures thereof.

17. A baking ingredient consisting essentially of a combination of an amylase enzyme and betaine, and optionally a carrier, and wherein the amount of enzyme is from 0.01 to 20 mg enzyme protein per 1 kg of flour and the amount of betaine is from 0.1 to 50 g per 1 kg of flour to be used in said baking.

18. A baking ingredient according to claim 17 and consisting essentially of a combination of betaine, enzyme and emulsifier, and optionally a carrier, said combination containing betaine, enzyme and emulsifier in synergistically effective amounts capable of improving the textural properties of a bakery product when baked compared to the properties provided by a bakery product made with similar amounts of said enzyme and emulsifier without said betaine, said improved properties being selected from the group consisting of increased softness, reduced staling, increased shelf-life and combinations thereof.

19. The baking ingredient according to claim 18, wherein the amount of betaine is from 0.1 to 50 g per 1 kg of flour, the amount of enzyme is from 0.01 to 20 mg enzyme protein per 1 kg of flour and the amount of emulsifier is from 0.1 to 20 g per 1 kg of flour to be used in said baking.

20. Method of using betaine in the production of baked products, wherein betaine is used in the baking process in combination with an amylase enzyme in order to improve the textural properties of said bakery product when baked, said improved properties being selected from the group consisting of increased softness, reduced staling, increased shelf-life and combinations thereof.

21. Use of a combination of betaine and an amylase enzyme for improving the textural properties of a bakery product when baked.

22. Use according to claim 21, wherein said improved properties are selected from the group consisting of increased softness, reduced staling, increased shelf-life and combinations thereof.

23. Use according to claim 21 or 22, wherein said combination includes an emulsifier.

## Patentansprüche

1. Backware umfassend Mehl und Wasser, wobei die Backware außerdem eine Kombination von Betain und einem Enzym in einer zur Verbesserung der strukturellen Eigenschaften der Backware nach dem Backen wirksamen Menge enthält, wobei die verbesserten Eigenschaften ausgewählt sind aus der Gruppe bestehend aus gesteigerte Weichheit, vermindertes altbacken werden, verlängerte Haltbarkeit und Kombinationen davon, und wobei die wirksame Menge des Betain von 0,1 bis 5,0 Gew.-% bezogen auf das Gewicht des Mehls umfasst und das Enzym eine Amylase umfasst, in einer wirksamen Menge im Bereich von 0,01 bis 20 mg Enzymprotein pro kg Mehl.

2. Backware gemäß Anspruch 1, wobei die Backware außerdem einen Emulgator in einer synergistisch wirksamen Menge enthält, um zumindest eine der genannten Eigenschaften der Backware nach dem Backen weiter zu verbessern.

3. Backware gemäß Anspruch 1 oder 2, wobei das Betain in einer Menge im Bereich von 0,1 % bis 0,5 % bezogen auf das Gewicht des Mehls vorhanden ist.

4. Backware gemäß Anspruch 3, wobei das Betain in einer Menge im Bereich von 0,1 % bis 0,2 % bezogen auf das Gewicht des Mehls vorhanden ist.

5. Backware gemäß Anspruch 1, wobei das Enzym Amylase umfasst.

6. Backware gemäß Anspruch 5, wobei die Backware ausgewählt ist aus der Gruppe bestehend aus Brot, Kuchen, Donut, Brownie, Waffel, Muffin, Brötchen, Bagel, Strudel, Feingebäck, Croissant, Pizza, süßem Brötchen, Pfannkuchen, kleinem Kuchen, gebackenem Riegel, Keks und Kräcker.

7. Backware gemäß Anspruch 6, wobei die Backware eine Brotware ist.

8. Backware gemäß Anspruch 1, wobei die Backware eine gebackene, halb gebackene oder ungebackene Backware ist.

9. Backware gemäß Anspruch 2, wobei der Emulgator ausgewählt ist aus der Gruppe bestehend aus Monoglyceriden, Diglyceriden, Glycerinmonostearat, ethoxylierten, Bernsteinsäure-, acetylierten oder Milchsäure-Monoglyceriden, Natriumstearyllactat, Lecithin, Phospholipid, Polyoxyethylenstearat, Polysorbat, Propyleneglycolmonoestern, Polyglycerinestern, Estern von Fettsäure und Monoglycerid und Mischungen davon.

10. Backware gemäß Anspruch 2, wobei der Emulgator in einer Menge im Bereich von 0,01 Gew.-% bis 2,0 Gew.-% bezogen auf das Gewicht des Mehls vorliegt.

11. Verfahren zur Verbesserung der Weichheit, des altbacken werden und/oder der Haltbarkeit von gebackenen Backwaren, wobei das Verfahren umfasst: Mischen von Mehl, Wasser, Enzym und Betain, und optionalen weiteren Zutaten, und Verarbeitung der resultierenden Mischung, um eine Backware zu erhalten, wobei das Betain 0,1 bis 5,0 Gew.-% bezogen auf das Gewicht des Mehls umfasst und das Enzym eine Amylase umfasst und in einer Menge im Bereich von 0,01 bis 20 mg Enzymprotein pro kg Mehl zugesetzt wird.

12. Verfahren gemäß Anspruch 11, wobei das Verarbeiten ausgewählt ist unter Formung eines Teiges, Halbfertigbacken und Backen.

13. Verfahren gemäß Anspruch 11, wobei das Verfahren außerdem ein Zufügen eines Emulgators zu der Mischung vor dem Backen umfasst, in einer Menge, die ausreicht um eine synergistische Verbesserung wenigstens einer der Eigenschaften der Backware nach dem Backen durch die Kombination von Betain, Enzym und Emulgator zu bewirken.

14. Verfahren gemäß Anspruch 11, wobei das Betain in einer Menge im Bereich von 0,1 % bis 0,5 % bezogen auf das Gewicht des Mehls zugefügt wird.

15. Verfahren gemäß Anspruch 13, wobei der Emulgator in einer Menge im Bereich von 0,01 % bis 2,0 % bezogen auf das Gewicht des Mehls zugefügt wird.

16. Verfahren gemäß Anspruch 13, wobei der Emulgator ausgewählt ist aus der Gruppe bestehend aus Monoglyceriden, Diglyceriden, Glycerinmonostearat, ethoxylierten, Bernsteinsäure-, acetylierten oder Milchsäure-Monoglyceriden, Natriumstearyllactat, Lecithin, Phospholipid, Polyoxyethylenstearat, Polysorbat, Propyleneglycolmonoestern, Polyglycerinestern, Estern von Fettsäure und Monoglycerid und Mischungen davon.

17. Backzutat im wesentlichen bestehend aus einer Kombination eines Amylaseenzyms und Betain und optional einem Träger wobei die Menge an Enzym von 0,01 bis 20 mg Enzymprotein pro 1 kg Mehl beträgt und die Menge an Beatin von 0,1 bis 50 g pro 1 kg Mehl, das beim Backen verwendet werden soll, beträgt.

18. Backzutat gemäß Anspruch 17 und im wesentlichen bestehend aus einer Kombination von Betain, Enzym und Emulgator und optional einem Träger, wobei die Kombination Betain, Enzym und Emulgator in synergistisch wirksamen Mengen enthält, so dass die strukturellen Eigenschaften einer Backware nach dem Backen im Vergleich zu den Eigenschaften einer Backware mit ähnlichen Mengen des Enzyms und Emulgators ohne das Betain verbessert werden können, wobei die verbesserten Eigenschaften ausgewählt sind aus der Gruppe bestehend aus gesteigerte Weichheit, vermindertes altbacken werden, verlängerte Haltbarkeit und Kombinationen davon.

19. Backzutat gemäß Anspruch 18, wobei die Menge Betain von 0,1 bis 50 g pro 1 kg Mehl beträgt, die Menge Enzymprotein von 0,01 bis 20 mg pro 1 kg Mehl beträgt und die Menge Emulgator von 0,1 bis 20 g pro 1 kg Mehl, das zum Backen verwendet werden soll, bneträgt.

20. Verfahren zur Verwendung von Betain in der Herstellung von Backwaren, wobei Betain in dem Backverfahren in Kombination mit einem Amylaseenzym verwendet wird, um die strukturellen Eigenschaften der Backware nach dem Backen zu verbessern, wobei die verbesserten Eigenschaften ausgewählt sind aus der Gruppe bestehend aus gesteigerte Weichheit, vermindertes altbacken werden, verlängerte Haltbarkeit und Kombinationen davon.

21. Verwendung einer Kombination von Betain und Amylaseenzym zur Veresserung der strukturellen Eigenschaften einer Backware nach dem Backen.

22. Verwendung gemäß Anspruch 21, wobei die verbesserten Eigenschaften ausgewählt sind aus der Gruppe bestehend aus gesteigerte Weichheit, vermindertes altbacken werden, verlängerte Haltbarkeit und Kombinationen davon.

23. Verwendung gemäß Anmspruch 21 oder 22, wobei die Kombination einen Emulgator einschließt.

## Revendications

1. Produit de boulangerie ou pâtisserie comprenant de la farine et de l'eau, ledit produit de boulangerie ou pâtisserie contenant en outre une combinaison de bétaïne et d'une enzyme dans une quantité efficace pour améliorer les propriétés de texture dudit produit de boulangerie ou pâtisserie une fois cuit, lesdites propriétés améliorées étant choisies dans le groupe consistant en une mollesse accrue, un rassissement réduit, une durée de conservation accrue et leurs combinaisons et où ladite quantité efficace de bétaïne comprend 0,1 à 5,0 % en poids calculée sur le poids de la farine et ladite enzyme comprend une amylase dans une quantité efficace allant de 0,01 à 20 mg de protéine enzymatique par kg de farine.

2. Produit de boulangerie ou pâtisserie selon la revendication 1, dans lequel ledit produit de boulangerie ou pâtisserie contient en outre un émulsifiant dans une quantité synergétiquement efficace pour améliorer davantage au moins l'une desdites propriétés dudit produit de boulangerie ou pâtisserie une fois cuit.

3. Produit de boulangerie ou pâtisserie selon la revendication 1 ou 2, dans lequel la bétaïne est présente dans des quantités allant de 0,1 % à 0,5 % calculées sur le poids de la farine.

4. Produit de boulangerie ou pâtisserie selon la revendication 3, dans lequel la bétaïne est présente dans des quantités allant de 0,1 % à 0,2 % calculées sur le poids de la farine.

5. Produit de boulangerie ou pâtisserie selon la revendication 1, dans lequel ladite enzyme comprend une amylase.

6. Produit de boulangerie ou pâtisserie selon la revendication 5, dans lequel ledit produit de boulangerie ou pâtisserie est choisi dans le groupe se composant des pain, gâteau, beignet, brownie, gaufre, muffin, petit pain, petit pain rond, strudel, pâtisserie, croissant, pizza, petit pain au lait, crêpe, petit gâteau, barre nutritive, biscuit tendre et craquelin.

7. Produit de boulangerie ou pâtisserie selon la revendication 6, dans lequel ledit produit de boulangerie ou pâtisserie est un produit à base de pain.

8. Produit de boulangerie ou pâtisserie selon la revendication 1, dans lequel ledit produit de boulangerie ou pâtisserie est un produit de boulangerie ou pâtisserie cuit, semi-cuit ou non cuit.

9. Produit de boulangerie ou pâtisserie selon la revendication 2, dans lequel l'émulsifiant est choisi dans le groupe consistant en monoglycéride, diglycéride, monostéarate de glycérol, monoglycérides éthoxylés, succinylés, acétylés ou lactylés, stéaroyl lactylate de sodium, lécithine, phospholipide, poly(oxyléthylène)stéarate, polysorbate, monoesters de propylène glycol, esters de polyglycérol, ester d'acide gras et ester de monoglycéride, et leurs mélanges.

10. Produit de boulangerie ou pâtisserie selon la revendication 2, dans lequel l'émulsifiant est présent dans une quantité allant de 0,01 % en poids à 2,0 % en poids calculée sur le poids de la farine.

11. Procédé d'amélioration des propriétés de mollesse, de rassissement et/ou de durée de conservation d'un produit de boulangerie ou pâtisserie cuit, le procédé comprenant la combinaison de farine, d'eau, d'enzyme et de bétaïne, et d'ingrédients supplémentaires facultatifs et le traitement du mélange résultant pour fournir un produit de boulangerie ou pâtisserie, ladite bétaïne comprenant 0,1 à 5,0 % en poids calculés sur le poids de la farine et ladite enzyme comprenant une amylase et étant fournie dans une quantité allant de 0,01 à 20 mg de protéine enzymatique par kg de farine.

12. Procédé selon la revendication 11, dans lequel ledit traitement est choisi parmi la formation d'une pâte, la semi-cuisson et la cuisson.

13. Procédé selon la revendication 11, dans lequel ledit traitement comprend en outre le fait d'inclure un émulsifiant dans ledit mélange avant la cuisson dans une quantité suffisante pour amener la combinaison de bétaïne, d'enzyme et d'émulsifiant à améliorer de manière synergique au moins l'une desdites propriétés dudit produit de boulangerie ou pâtisserie une fois cuit.

14. Procédé selon la revendication 11, dans lequel la bétaïne est fournie dans des quantités allant de 0,1 % en poids à 0,2 % en poids calculées sur le poids de la farine.

15. Procédé selon la revendication 13, dans lequel l'émulsifiant est fourni dans des quantités allant de 0,01 % en poids à 2,0 % en poids calculées sur le poids de la farine.

16. Procédé selon la revendication 13, dans lequel ledit émulsifiant est choisi dans le groupe consistant en monoglycéride, diglycéride, monostéarate de glycérol, monoglycérides éthoxylés, succinylés, acétylés ou lactylés, stéaroyl lactylate de sodium, lécithine, phospholipide, poly(oxyléthylène)stéarate, polysorbate, monoesters de propylène glycol, esters de polyglycérol, ester d'acide gras et ester de monoglycéride, et leurs mélanges.

17. Ingrédient de cuisson consistant essentiellement en une combinaison d'une enzyme amylase et de bétaïne, et facultativement d'un support, et où la quantité d'enzyme est de 0,01 à 20 mg de protéine enzymatique pour 1 kg de farine et la quantité de bétaïne est de 0,1 à 50 g pour 1 kg de farine à utiliser dans ladite cuisson.

18. Ingrédient de cuisson selon la revendication 17 et consistant essentiellement en une combinaison de bétaïne, d'enzyme et d'émulsifiant, et facultativement d'un support, ladite combinaison contenant la bétaïne, l'enzyme et l'émulsifiant dans des quantités synergiquement efficaces capables d'améliorer les propriétés de texture d'un produit de boulangerie ou pâtisserie une fois cuit par rapport aux propriétés fournies par un produit de boulangerie ou pâtisserie préparé avec des quantités similaires de ladite enzyme et dudit émulsifiant sans ladite bétaïne, lesdites propriétés améliorées étant choisies dans le groupe consistant en une mollesse accrue, un rassissement réduit, une durée de conservation accrue et leurs combinaisons.

19. Ingrédient de cuisson selon la revendication 18, dans lequel la quantité de bétaïne est de 0,1 à 50 g pour 1 kg de farine, la quantité d'enzyme est de 0,01 à 20 mg de protéine enzymatique pour 1 kg de farine et la quantité d'émulsifiant est de 0,1 à 20 g pour 1 kg de farine à utiliser dans ladite cuisson.

20. Procédé d'utilisation de bétaïne dans la production de produits cuits, dans lequel la bétaïne est utilisée dans le procédé de cuisson en combinaison avec une enzyme amylase afin d'améliorer les propriétés de texture dudit produit de boulangerie ou pâtisserie une fois cuit, lesdites propriétés améliorées étant choisies dans le groupe consistant en une mollesse accrue, un rassissement réduit, une durée de conservation accrue et leurs combinaisons.

21. Utilisation d'une combinaison de bétaïne et d'une enzyme amylase pour améliorer les propriétés de texture d'un produit de boulangerie ou pâtisserie une fois cuit.

22. Utilisation selon la revendication 21, dans laquelle lesdites propriétés améliorées sont choisies dans le groupe consistant en une mollesse accrue, un rassissement réduit, une durée de conservation accrue et leurs combinaisons.

23. Utilisation selon la revendication 21 ou 22, dans laquelle ladite combinaison comprend un émulsifiant.
